(19) Europäisches Patentamt
European Patent Office
Office européen des brevets

(11) Veröffentlichungsnummer: **0 040 750**
**B1**

(12) **EUROPÄISCHE PATENTSCHRIFT**

(45) Veröffentlichungstag der Patentschrift: **08.08.84**

(51) Int. Cl.³: **C 08 L 83/04,** C 08 K 3/04

(21) Anmeldenummer: **81103609.4**

(22) Anmeldetag: **12.05.81**

(54) **Zu flammabweisenden Elastomeren, gegebenenfalls nach Zusatz von Vernetzungsmittel, vernetzbare Massen auf Grundlage von Organopolysiloxan.**

(30) Priorität: **14.05.80 DE 3018549**

(43) Veröffentlichungstag der Anmeldung: **02.12.81 Patentblatt 81/48**

(45) Bekanntmachung des Hinweises auf die Patenterteilung: **08.08.84 Patentblatt 84/32**

(84) Benannte Vertragsstaaten: **AT BE CH DE FR GB IT LI NL SE**

(56) Entgegenhaltungen:
**DE - A - 2 034 919**
**US - A - 3 508 872**
**US - A - 3 923 705**

(73) Patentinhaber: **WACKER-CHEMIE GMBH, Prinzregentenstrasse 22, D-8000 München 22 (DE)**

(72) Erfinder: **Schiller, August, Dr. Dipl.-Chem., Göllstrasse 22, D-8262 Neuötting (DE)**
Erfinder: **Wolfer, Dietrich, Dr. Dipl.-Chem., A-5110 Untereching/Salzburg (AT)**

**EP 0 040 750 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Zu flammabweisenden oder selbstverlöschenden Elastomeren vernetzbare Massen auf Grundlage von Organopolysiloxan, die Metallhydroxyd oder Hydrat von Metalloxyd, wie Cerihydroxyd oder Aluminiumoxydhydrat, enthalten, sind bereits bekannt. Hierzu sei z. B. auf US 3 821 140, ausgegeben 28. Juni 1974, G. Milbert, Rhone-Poulenc S.A. und US 3 677 999, ausgegeben 18. Juli 1972, H. Denk et al., Siemens Aktiengesellschaft, verwiesen. Die erfindungsgemäßen Massen ergeben Elastomere, die in noch höherem Ausmaß flammabweisend oder selbstverlöschend sind als Elastomere aus bisher bekannten vergleichbaren Massen. Weiterhin besitzen Elastomere aus erfindungsgemäßen Massen, soweit diese Massen bei Raumtemperatur vernetzbar sind, höhere Zug- und Weiterreißfestigkeit als Elastomere aus bisher bekannten vergleichbaren Massen.

Gegenstand der Erfindung sind zu flammabweisenden Elastomeren, gegebenenfalls nach Zusatz von Vernetzungsmittel, vernetzbare Massen auf Grundlage von Organopolysiloxan, die zusätzlich zum Organopolysiloxan und gegebenenfalls Vernetzungsmittel und/oder weiteren Zusätzen Metallhydroxyd und/oder Hydrat von Metalloxyd enthalten, dadurch gekennzeichnet, daß sie auch Graphit enthalten.

Gemäß DE-A-2 034 919 und US-A-3 932 705 wird die Flammabweisung von elastischen und nichtelastischen Formkörpern auf Grundlage von Organopolysiloxanen, die Platin enthalten, durch Zusatz von Ruß erhöht. Beim Gegenstand der Erfindung wird jedoch die Flammabweisung auch dann erhöht, wenn bzw. obwohl die daraus hergestellten Elastomeren kein Platin erhalten.

Die Organopolysiloxane in den erfindungsgemäßen Massen können beliebige Organopolysiloxane sein, die auch in den bisher bekannten, zu flammabweisenden Elastomeren vernetzbaren Massen auf Grundlage von Organopolysiloxan vorliegen konnten. Es handelt sich dabei insbesondere um Diorganopolysiloxane, welche durch die allgemeine Formel

$$Z_nSiR_{3-n}O(SiR_2O)_xSiR_{3-n}Z_n$$

wiedergegeben werden können. In dieser Formel bedeutet R gleiche oder verschiedene, einwertige, gegebenenfalls substituierte Kohlenwasserstoffreste, Z eine Hydroxylgruppe oder gleiche oder verschiedene hydrolysierbare Gruppen oder gleiche oder verschiedene hydrolysierbare Gruppen oder gleiche oder verschiedene hydrolysierbare Atome, n ist 0, 1, 2 oder 3 und x ist eine Zahl mit einem solchen Wert, daß die durchschnittliche Viskosität dieser Diorganopolysiloxane mindestens 50 mPa · s bei 25° C beträgt.

Innerhalb bzw. entlang der Siloxankette der Diorganopolysiloxane der oben angegebenen Formel können, was durch derartige Formeln üblicherweise nicht dargestellt wird, zusätzlich zu den Diorganosiloxaneinheiten ($SiR_2O$) noch andere Siloxaneinheiten vorliegen. Beispiele für solche anderen, meist nur als Verunreinigungen vorliegenden Siloxaneinheiten sind solche der Formeln $RSiO_{3/2}$, $R_3SiO_{1/2}$ und $SiO_{4/2}$, wobei R jeweils die oben dafür angegebene Bedeutung hat.

In gleichen oder verschiedenen Molekülen der oben angegebenen Formel können die Werte für n untereinander gleich oder verschieden sein.

Es können Gemische aus Molekülen mit verschiedenen Werten für x vorliegen.

Beispiele für Kohlenwasserstoffreste R sind Alkylreste, wie der Methyl-, Äthyl-, n-Propyl- und Isopropylrest sowie Butyl- und Hexylreste; Alkenylreste, wie der Vinyl-, Allyl- und Butadienylrest; cycloaliphatische Kohlenwasserstoffreste, wie der Cyclopentyl- und Cyclohexylrest sowie Cyclohexenyl- und Methylcyclohexylreste; Arylreste, wie der Phenylrest; Alkarylreste, wie Tolylreste; und Aralkylreste, wie der beta-Phenyläthylrest.

Bevorzugte Beispiele für substituierte Kohlenwasserstoffreste R sind halogenierte Kohlenwasserstoffreste, wie der 3,3,3-Trifluorpropylrest, sowie Chlorphenyl- und Bromtolylreste, weiterhin Cyanalkylreste, wie der beta-Cyanäthylrest.

Insbesondere wegen der leichteren Zugänglichkeit sind vorzugsweise mindestens 70% der durchschnittlichen Anzahl der SiC-gebundenen organischen Reste im Organopolysiloxan, das in den erfindungsgemäßen Massen vorliegt, Methylreste. Die restlichen SiC-gebundenen organischen Reste im Organopolysiloxan, das in den erfindungsgemäßen Massen vorliegt, sind vorzugsweise Phenylreste und/oder Vinylreste.

Die hydrolysierbaren Gruppen Z können die gleichen hydrolysierbaren Gruppen sein, die in den herkömmlicherweise zur Herstellung von unter Ausschluß von Wasser lagerfähigen, bei Zutritt von Wasser bei Raumtemperatur zu Elastomeren härtenden Massen verwendeten hydrolysierbaren Siliciumverbindungen vorhanden sein können. Beispiele für hydrolysierbare Gruppen Z sind somit Acetoxy-, Äthoxy-, Methosyäthylenoxy-, Dimethylaminoxy-, n-Butylamino-, sec.-Butylamino-, Cyclohexylamino-, Benzoylmethylamino- und 2-Butanonoximgruppen.

Beispiele für hydrolysierbare Atome Z sind Chlor- und Wasserstoffatome.

Beispiele für Vernetzungsmittel, die in den erfindungsgemäßen Massen vorliegen können, sind solche, wie sie für die Herstellung von unter Ausschluß von Wasser lagerfähigen, bei Zutritt von Wasser bei Raumtemperatur zu Elastomeren vernetzenden Massen herkömmlicherweise verwendet werden können, z. B. Methyltriacetoxysilan, Methyl-tert.-butoxyacetoxysiliciumverbindungen mit insgesamt drei tert.-Butoxy- und Acetoxygruppen je Molekül, Methyltris-(cyclohexylamino)-silan und Methyltris-(2-butanonoxim)-silan und Gemische aus Methyltris-(cyclohexylamino)-silan und Methyltris-(2-butanonoxim)-silan.

Beispiele für Vernetzungsmittel, die in den erfindungsgemäßen Massen erst mehr oder weniger unmittelbar vor deren endgültiger Formgebung vorliegen können, wenn die Massen nicht bei Temperaturen unterhalb −15° C aufbewahrt werden, sind Hexaäthoxydisiloxan und ein Äthylpolysilikat mit einem $SiO_2$-Gehalt von etwa 40 Gewichtsprozent.

Weitere Beispiele für Vernetzungsmittel, die in den erfindungsgemäßen Massen auch längere Zeit vor deren endgültiger Formgebung vorliegen können, sind Methylwasserstoffpolysiloxane in Kombination mit Platinkatalysatoren.

Wichtige Beispiele für Vernetzungsmittel, die in den erfindungsgemäßen Massen längere Zeit vor deren endgültiger Formgebung vorliegen können, sind auch organische peroxydische Verbindungen, wie Benzoylperoxyd, Dicumylperoxyd und Bis-(2,4-dichlorbenzoyl)-peroxyd.

Die Vernetzungsmittel können in den erfindungsgemäßen Massen selbstverständlich in den gleichen Mengen vorliegen wie in den bisher bekannten zu Elastomeren vernetzbaren Massen bzw. den erfindungsgemäßen Massen in den gleichen Mengen zugesetzt werden wie den bisher bekannten Massen, die zu Elastomeren vernetzbar sind und denen Vernetzungsmittel erst mehr oder weniger unmittelbar vor der endgültigen Formgebung zugesetzt wird. Die erfindungsgemäßen Massen aber auch frei von Vernetzungsmittel sein, wenn sie durch Hochenergiestrahlen, wie alpha-, beta- oder gamma-Strahlen, vernetzt werden.

Beispiele für weitere Zusätze, die in den erfindungsgemäßen Massen zusätzlich zum die Grundlage der Massen bildenden Organopolysiloxan, gegebenenfalls Vernetzungsmittel, Metallhydroxyd und/oder Hydrat von Metalloxyd sowie dem erfindungsgemäß wesentlichen Graphit vorliegen können, sind verstärkende Füllstoffe, nicht-verstärkende Füllstoffe, Pigmente, lösliche Farbstoffe, Organopolysiloxanharze, einschließlich solcher aus $(CH_3)_3SiO_{1/2}$- und $SiO_{4/2}$-Einheiten, Korrosionsinhibitoren, Oxydationsinhibitoren, Hitzestabilisatoren, Lösungsmittel, Mittel zur Verbesserung der Haftung der aus den Massen hergestellten Elastomeren auf den Unterlagen, auf denen die Elastomeren erzeugt wurden, wie 3-(2-Aminoäthylamino)-propyltrimethoxysilan oder Umsetzungsprodukte aus 3-(2-Aminoäthylamino)-propyltrimethoxysilan mit Si-gebundene Hydroxylgruppen aufweisendem Dimethylpolysiloxan, Kondensationskatalysatoren, wie Zinnsalze oder Organozinnsalze von Carbonsäuren, z. B. Dibutylzinndilaurat, Mittel zur Erhöhung der Standfestigkeit (englisch: non slump properties), wie Alkylphenolpolyäthylenglykoläther, und Weichmacher, wie bei Raumtemperatur flüssige, durch Trimethylsiloxygruppen endblockierte Dimethylpolysiloxane oder Phosphorsäureester, Ultraviolettabsorber und zellenerzeugende Mittel, wie Azodicarbonamid, sowie Mittel zur Verminderung des Verstrammens der Massen beim Lagern, wie in den endständigen Einheiten je eine Si-gebundene Hydroxylgruppe aufweisende Dimethylpolysiloxane mit einer Viskosität von 2 bis 50 mPa · s bei 25° C.

Beispiele für verstärkende Füllstoffe, also für Füllstoffe mit einer Oberfläche von mindestens 50 $m^2/g$, sind insbesondere pyrogen erzeugte Siliciumdioxyde, unter Erhaltung der Struktur entwässerte Kieselsäure-Hydrogele und andere Arten von gefälltem Siliciumdioxyd mit einer Oberfläche von mindestens 50 $m^2/g$ und Metalloxyde, wie Titandioxyd, Ferrioxyd, Aluminiumoxyd und Zinkoxyd, soweit sie jeweils eine Oberfläche von mindestens 50 $m^2/g$ aufweisen.

Beispiele für nicht verstärkende Füllstoffe, also für Füllstoffe mit einer Oberfläche von weniger als 50 $m^2/g$, sind bzw. können sein: Quarzmehl, Diatomeenerde, Neuburger Kreide (englisch: Neuburg Chalk), Calciumsilikat, Zirkoniumsilikat, Calciumcarbonat, z. B. in Form von gemahlener Kreide, calciniertes Aluminiumsilikat und pulverförmiges Natriumaluminiumsilikat mit Molekularsiebeigenschaften.

Auch faserige Füllstoffe, wie Asbeste und/oder Glasfasern, insbesondere solche mit einer durchschnittlichen Länge von höchsten 0,5 mm, können in den erfindungsgemäßen Massen enthalten sein.

Alle oben genannten, verstärkenden und nicht-verstärkenden Füllstoffe können hydrophobiert sein, beispielsweise durch Behandlung mit Trimethyläthoxysilan oder Stearinsäure. Falls erwünscht, kann eine solche Behandlung z. B. in einer Kugelmühle durchgeführt worden sein.

Es können Gemische aus verschiedenen verstärkenden und/oder nichtverstärkenden Füllstoffen in den erfindungsgemäßen Massen vorliegen.

Als Metallhydroxyd und/oder Hydrat von Metalloxyd kann auch in den erfindungsgemäßen Massen Metallhydroxyd und/oder Hydrat von Metalloxyd der gleichen Art vorliegen wie in den bisher bekannten, flammabweisende Produkte ergebenden Massen auf Grundlage von organischen oder silicoorganischen Polymeren, die mindestens ein Metallhydroxyd oder Hydrat von Metalloxyd enthalten. Bevorzugt ist $Al(OH)_3$, das auch durch die Formel $Al_2O_3 \cdot H_2O$ wiedergegeben wird. Weitere Beispiele für geeignete Metallhydroxyde bzw. Hydrate von Metalloxyden sind Cerihydroxyd, Cerohydroxyd, Tricalciumaluminat-Hexahydrat und Magnesiumhydroxyd.

Falls erwünscht, können die erfindungsgemäßen Massen Gemische aus verschiedenen Metallhydroxyden und/oder Hydraten von Metalloxyden, z. B. ein Gemisch aus $Al(OH)_3$ und Tricalciumaluminat-Hexahydrat, enthalten.

Vorzugsweise enthält das in den erfindungsgemäßen Massen enthaltende Metallhydroxyd und/oder Hydrat von Metalloxyd auf seiner Oberfläche Organosiloxygruppen. Unter diesen Organosiloxygruppen sind wiederum solche der Formel $CH_2 = CHSiO_{3/2}$ bevorzugt, um Elastomere mit besonders großer mechanischer Fertigkeit zu erzielen.

Vorzugsweise enthalten die erfindungsgemäßen Massen Metallhydroxyd und/oder Hydrat von Metalloxyd, insbesondere $Al(OH)_3$, in Mengen von insgesamt 10 bis 60 Gewichtsprozent, insbesondere 30 bis 40 Gewichtsprozent, jeweils bezogen auf das Gesamtgewicht der jeweiligen Masse. Bei niedrigeren Konzentrationen ist das Ausmaß der Flammabweisung für manche Anwendungszwecke nicht befriedigend. Höhere Konzentrationen können die mechanischen Eigenschaften der aus den Massen erzeugten Elastomeren in für manche Anwendungszwecke unerwünschtem Ausmaß beeinträchtigen.

Als Graphit ist solcher bevorzugt, der eine spezifische Oberfläche von 3 bis 15 $m^2/g$, insbesondere 8 bis 11 $m^2/g$ hat.

Vorzugsweise enthalten die erfindungsgemäßen Massen Graphit in Mengen von 0,5 bis 30 Gewichtsprozent, insbesondere 1 bis 5 Gewichtsprozent, jeweils bezogen auf das Gesamtgewicht der jeweiligen Masse.

Zur Bereitung der erfindungsgemäßen Massen können alle Bestandteile der jeweiligen Masse in beliebiger Reihenfolge miteinander vermischt werden. Dieses Vermischen erfolgt vorzugsweise bei Raumtemperatur. Falls erwünscht, kann dieses Vermischen aber auch bei höheren Temperaturen, z. B. bei einer Temperatur oder mehr Temperaturen im Bereich von 35 bis 200° C erfolgen. Dabei dürfen hitzeempfindliche Bestandteile, wie organische peroxydische Verbindungen, natürlich nur bei Temperaturen eingemischt werden, bei denen sie sich nicht verändern.

Die Formgebung und Vernetzung der erfindungsgemäßen Massen kann in beliebiger bekannter Weise bei Raumtemperatur oder niedrigeren Temperaturen bzw. höheren Temperaturen erfolgen.

Die erfindungsgemäßen Massen können z. B. in elektrischen oder elektronischen Vorrichtungen, zum Herstellen von Dichtungsprofilen oder als Fugendichtungsmassen verwendet werden.

In den folgenden Beispielen beziehen sich alle Angaben von Teilen auf das Gewicht. Das Ausmaß der Flammabweisung wird jeweils durch den LOI-(Limited Oxygen Index)-Wert der gemäß ASTM-D2863-70 bestimmt wird wiedergegeben. Je höher dieser Wert ist, um so höher ist das Ausmaß der Flammabweisung.

Die Zugfestigkeit ist gemäß DIN (Deutsche Industrie Norm) 53 504 mit Normstab S3A, die Weiterreißfestigkeit nach ASTM D 624 mit Normstab B bestimmt.

## Beispiel 1

In ein Gemisch aus

| | |
|---|---|
| 20 Teilen | eines durch Trimethylsiloxygruppen endblockierten Dimethylpolysiloxans mit einer Viskosität von 100 mPa · s bei 25° C, |
| 30 Teilen | eines in den endständigen Einheiten je eine Si-gebundene Hydroxylgruppe aufweisenden Dimethylpolysiloxans mit einer Viskosität von 80 000 mPa · s bei 25° C, |
| 1 Teil | mit Polyäthylenglykol aus 13 Äthylenoxydeinheiten veräthertem Tri-n-butylphenol und |
| 0,5 Teilen | 3-(2-Aminoäthylamino)-propyltrimethoxysilan |

werden

| | |
|---|---|
| 6 Teile | einer Mischung aus gleichen Molteilchen Methyltris-(cyclohexylamino)-silan und Methyltris-(2-butanonoxim)-silan |

eingemischt. In die so erhaltene Mischung werden zunächst 36 Teile gemahlenes und durch Umsetzung mit Vinyltriäthoxysilan an der Oberfläche Organosiloxygruppen $Al(OH)_3$ mit einer Oberfläche von etwa 7 $m^2/g$, dann 4 Teile Graphit mit einer Oberfläche von etwa 10 $m^2/g$, dann 3 Teile pyrogen in der Gasphase erzeugtes Siliciumdioxyd mit einer Oberfläche von etwa 150 $m^2/g$ und schließlich 0,1 Teile Dibutylzinndilaurat eingemischt.

Die so erhaltene Masse wird in Tuben abgefüllt und 24 Stunden bei Raumtemperatur gelagert. Dann wird eine Probe aus diesen Tuben in $2 \pm 0{,}1$ mm dicker Schicht insgesamt 4 Wochen bei 23° C und 50 Gewichtsprozent relativer Luftfeuchtigkeit vernetzen gelassen und gelagert.

Die Ergebnisse der Prüfung des so erhaltenen Elastomeren sind in der weiter unten folgenden Tabelle 1 angegeben.

Beispiel 2

Die in Beispiel 1 beschriebene Arbeitsweise wird wiederholt mit der Abänderung, daß anstelle der 36 Teile von an der Oberfläche Organosiloxygruppen aufweisendem $Al(OH)_3$ 36 Teile $Al(OH)_3$, dessen Oberfläche ebenfalls etwa 7 $m^2/g$ beträgt, jedoch frei von Organosiloxygruppen ist, verwendet werden.

Beispiel 3

Die in Beispiel 1 beschriebene Arbeitsweise wird wiederholt mit der Abänderung, daß anstelle der 4 Teile Graphit 2 Teile Graphit mit einer Oberfläche von etwa 10 $m^2/g$ verwendet werden.

Vergleichsversuch V1

Die in Beispiel 1 beschriebene Arbeitsweise wird wiederholt mit der Abänderung, daß 40 Teile des an der Oberfläche Organosiloxygruppen aufweisenden $Al(OH)_3$ anstelle der 36 Teile des an der Oberfläche Organosiloxygruppen aufweisenden $Al(OH)_3$ eingesetzt werden und kein Graphit mitverwendet wird.

Vergleichsversuch V2

Die in Beispiel 1 beschriebene Arbeitsweise wird wiederholt mit der Abänderung, daß 40 Teile gemahlene und mit Stearinsäure überzogene Kreide anstelle der 36 Teile des an der Oberfläche Organosiloxygruppen aufweisenden $Al(OH)_3$ und der 4 Teile Graphit eingesetzt werden.

Vergleichsversuch V3

Die in Beispiel 1 beschriebene Arbeitsweise wird wiederholt mit der Abänderung, daß 36 Teile gemahlene und mit Stearinsäure überzogene Kreide anstelle der 36 Teile des an der Oberfläche Organosiloxygruppen aufweisenden $Al(OH)_3$ verwendet werden.

Tabelle 1

| | Beispiel | | | Vergleichsversuch | | |
|---|---|---|---|---|---|---|
| | 1 | 2 | 3 | V1 | V2 | V3 |
| LOI-Wert % | 40 | 37 | 38 | 30 | 26 | 28 |
| Zugfestigkeit N/mm² | 1,8 | 2,0 | 1,8 | 1,5 | 1,2 | 1,3 |
| Weiterreißfestigkeit N/mm | 12,4 | 10,5 | 9,4 | 8,4 | 5,2 | 5,5 |

Elastomer aus der Masse gemäß Beispiel 1 wurde auch in Anlehnung an DIN 4102 »Brandverhalten von Baustoffen und Bauteilen«, Teil 1 »Baustoffe: Begriffe, Anforderungen und Prüfungen« im sogenannten Brandschacht untersucht. Die Prüfkörper bestanden aus einem 6 mm breiten und 5 mm dicken Streifen aus Elastomer zwischen zwei 200 mm · 17 mm · 5 mm-Asbestplatten.

Ergebnisse:

Mittelwert der Restlänge jedes Probekörpers: 39%
Mittlere Rauchgastemperatur: 115° C

Die Voraussetzungen für die Einreihung der Masse in die Baustoffklasse B1 = schwerentflammbare Baustoffe sind also erfüllt.

Beispiel 4

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von $8 \cdot 10^6$ mPa · s bei 25° C werden in einem bei 150° C betriebenen Kneter zunächst mit 35 Teilen pyrogen in der Gasphase erzeugtem Siliciumdioxyd mit einer Oberfläche von 200 $m^2/g$, dann mit 1 Teil durch Trimethylsiloxygruppen endblockiertem Dimethylpolysiloxan mit einer Viskosität von 96 mPa · s bei 25° C, dann mit 7 Teilen eines in den endständigen Einheiten je eine Si-gebundene Hydroxylgruppe aufweisenden Dimethylpolysiloxans mit einer Viskosität von 40 mPa · s bei 25° C und schließlich erneut mit 1 Teil durch Trimethylsiloxygruppen endblockiertem Dimethylpolysiloxan mit einer Viskosität von 96 mPa · s bei 25° C vermischt. In die so erhaltene Mischung werden nach Abkühlen auf 110° C 160 Teile gemahlenes und durch Umsetzung mit Vinyltriäthoxysilan an der Oberfläche Organosiloxygruppen aufweisendes $Al(OH)_3$ mit einer Oberfläche von etwa 7 $m^2/g$ sowie 4 Teile Graphit mit einer Oberfläche von etwa 10 $m^2/g$ und nach dem Abkühlen auf Raumtemperatur 12 Teile eines Gemisches aus gleichen Teilen Bis-(2,4-dichlorbenzoyl)-peroxyd und durch Trimethylsiloxygruppen endblockiertem Dimethylpolysiloxan mit einer Viskosität von 250 mPa · s bei 25° C eingemischt.

Beispiel 5

Die in Beispiel 4 beschriebene Arbeitsweise wird wiederholt mit der Abänderung, daß anstelle der 4 Teile Graphit 2 Teile Graphit mit einer Oberfläche von etwa 10 $m^2/g$ verwendet werden.

Vergleichsversuch V4

Die in Beispiel 4 beschriebene Arbeitsweise wird wiederholt mit den Abänderungen, daß 164 Teile des an der Oberfläche Organosiloxygruppen aufweisenden $Al(OH)_3$ anstelle der 160 Teile des an der Oberfläche Organosiloxygruppen aufweisenden $Al(OH)_3$ eingesetzt werden, kein Graphit mitverwendet wird und anstelle der 12 Teile des Gemisches aus gleichen Teilen Bis-(2,4-dichlorbenzoyl)-peroxyd und niederviskosem, durch Trimethylsiloxygruppen endblockiertem Dimethylpolysiloxan 6 Teile des gleichen Gemisches eingesetzt werden.

Aus den gemäß den Beispielen 4 und 5 sowie Vergleichsversuch V4 erhaltenen, zu Elastomeren vernetzbaren Massen werden durch 10 Minuten Erwärmen auf 150° C unter einem Druck von 30 bar (abs.) und 4 Stunden druckloses Erwärmen auf 150° C sowie 1 Stunde druckloses Erwärmen auf 200° C Platten mit einer Dicke von 2 mm hergestellt.

Die Ergebnisse der Prüfung der so erhaltenen Elastomeren sind in Tabelle 2 angegeben.

Tabelle 2

| | Beispiel 4 | 5 | Vergleichsversuch V4 |
|---|---|---|---|
| LOI-Wert % | 58 | 54 | 47 |
| Shore-A-Härte | 65 | 65 | 65 |
| Zugfestigkeit $N/mm^2$ | 6,0 | 6,0 | 6,0 |
| Weiterreißfestigkeit N/mm | 16 | 14 | 14 |

## Patentansprüche

1. Zu flammabweisende Elastomeren, gegebenenfalls nach Zusatz von Vernetzungsmittel, vernetzbare Massen auf Grundlage von Organopolysiloxan, die zusätzlich zum Organopolysiloxan und gegebenenfalls Vernetzungsmittel und/oder weiteren Zusätzen Metallhydroxyd und/oder Hydrat von Metalloxyd enthalten, dadurch gekennzeichnet, daß sie auch Graphit enthalten.
2. Massen nach Anspruch 1, dadurch gekennzeichnet, daß sie Graphit in Mengen von 0,5 bis 30 Gewichtsprozent, bezogen auf das Gesamtgewicht der jeweiligen Masse, enthalten.
3. Massen nach Anspruch 1, dadurch gekennzeichnet, daß sie Graphit in Mengen von 1 bis 5 Gewichtsprozent, bezogen auf das Gesamtgewicht der jeweiligen Masse, enthalten.
4. Massen nach Anspruch 1, 2 oder 3, dadurch gekennzeichnet, daß sie Graphit mit einer spezifischen Oberfläche von 3 bis 15 $m^2/g$ enthalten.

## Claims

1. Compositions that are based on a organopolysiloxane and can be crosslinked, optionally after the addition of a crosslinking agent, to form flame-repellent elastomers and that contain, in addition to the organopolysiloxane and optional crosslinking agent/or further additives, a metal hydroxide and/or a hydrate of a metal oxide, characterised in that they also contain graphite.
2. Compositions according to claims 1, characterised in that they contain graphite in amounts of from 0.5 to 30% by weight, based on the total weight of the particular composition.
3. Compositions according to claims 1, characterised in that they contain graphite in amounts of from 1 to 5% by weight, based on the total weight of the particular composition.
4. Compositions according to claim 1, 2 or 3, characterised in that they contain graphite having a specific surface area of from 3 to 15 $m^2/g$.

## Revendications

1. Masses à base de polyorganosiloxane réticulables en élastomères ignifuges, le cas échéant après addition d'agents de réticulation, qui contiennent en plus du polyorganosiloxane et le cas échéant des agents de réticulation, et/ou d'autres additifs un hydroxyde métallique et/ou un hydrate d'oxyde métallique, caractérisées en ce qu'elles contiennent également du graphite.
2. Masses suivant la revendication 1, caractérisées en ce qu'elles contiennent du graphite à raison de 0,5 à 30% en poids par rapport au poids total de la masse.
3. Masses suivant la revendication 1, caractérisées en ce qu'elles contiennent du graphite à raison de 1 à 5% en poids par rapport au poids total de la masse.
4. Masses suivant l'une quelconque des revendications 1, 2 ou 3 caractérisées en ce qu'elles contiennent un graphite ayant une surface spécifique de 3 à 15 $m^2/g$.